Europäisches Patentamt

European Patent Office ·

Office européen des brevets

(19)

(11) Veröffentlichungsnummer : **0 193 076**
**B1**

(12) **EUROPÄISCHE PATENTSCHRIFT**

(45) Veröffentlichungstag der Patentschrift :
17.05.89

(21) Anmeldenummer : 86102037.8

(22) Anmeldetag : 18.02.86

(51) Int. Cl.⁴ : **B 29 C 47/02**, B 29 D 9/00 //
B29K21:00, B29L31:26

(54) **Verfahren zum Herstellen von Dichtungsstreifen.**

(30) Priorität : 23.02.85 DE 3506410

(43) Veröffentlichungstag der Anmeldung :
03.09.86 Patentblatt 86/36

(45) Bekanntmachung des Hinweises auf die Patenterteilung : 17.05.89 Patentblatt 89/20

(84) Benannte Vertragsstaaten :
AT BE CH DE FR GB IT LI LU NL SE

(56) Entgegenhaltungen :
AT–B– 312 909
DE–B– 1 242 355

(73) Patentinhaber : **Continental Aktiengesellschaft**
**Königsworther Platz 1**
**D-3000 Hannover 1 (DE)**

(72) Erfinder : **Bernitz, Bernhard**
**Langenforther Strasse 60**
**D-3000 Hannover 51 (DE)**
Erfinder : **Brodmann, Richard**
**Sadebuschstrasse 15**
**D-3000 Hannover 21 (DE)**
Erfinder : **Hermann, Dietmar**
**Kantstrasse 7**
**D-3008 Garbsen 6 (DE)**

EP 0 193 076 B1

## Beschreibung

Die Erfindung bezieht sich auf Verfahren zum Herstellen eines Profilstrangs aus Kautschuk oder einem kautschukartigen Elastomer mit in Teilbereichen seines Querschnittsumfanges in haftender Verbindung aufgebrachten und über seine ganze Länge durchlaufenden Gleitbelagstreifen aus einem andersartigen Stoff.

Gemäß einem älteren, nicht vorveröffentlichten Vorschlag der Anmelderin (Europäische Patentanmeldung 85 100 330.1) können derartige, beispielsweise zur Abdichtung der Schiebefenster von Kraftfahrzeugen oder Gebäuden bestimmte Profilstränge mit einem Gleitbelagstreifen versehen werden, indem man den Gleitbelagstreifen in der formgebenden Düse einer Strangpresse mit dem Kautschuk oder dem kautschukartigen Material des Grundprofils zusammenführt, mit diesem vereinigt auspreßt und den so geformten Profilstrang anschließend vulkanisiert. Dies Verfahren ermöglichte die kontinuierliche Herstellung von Dichtungsprofilen mit fest haftendem Gleitbelag und führte bereits zu Produkten mit hervorragenden Gebrauchseigenschaften.

Der vorliegenden Erfindung liegt die Aufgabe zugrunde, dies Verfahren so weiterzubilden, daß die Haftung zwischen den verschiedenartigen Komponenten dieser Dichtungsprofile auch bei Verwendung von normalerweise schlecht haftenden, beispielsweise aus Polytetrafluoräthylen oder ähnlichen Kunststoffen bestehenden Gleitbelagstreifen verbessert und damit der Gebrauchswert der fertigen Profilstreifen erhöht wird.

Gemäß der vorliegenden Erfindung gelingt die Lösung dieser Aufgabe überraschenderweise dadurch, daß ein vorgefertigter Gleitbelagstreifen in in Längsrichtung gerecktem Zustand im Spritzkopf einer Strangpresse mit dem in diesem Spritzkopf aus Kautschuk oder einem kautschukartigen Elastomer geformten Grundprofil vereinigt und anschließend mit diesem zusammenvulkanisiert wird. Dabei wird der Gleitbelagstreifen vorzugsweise entweder unter der unmittelbaren, dauernden Einwirkung einer den gereckten Zustand bewirkenden Zugkraft auf das Grundprofil aufgebracht, oder er wird bleibend vorgereckt und — gegebenenfalls nach Zwischenlagerung — in einem späteren Zeitpunkt mit dem kautschukartigen Grundmaterial des Profilstranges vereinigt. Das Ausmaß der Reckung richtet sich dabei nach dem Werkstoff des Gleitbelagstreifens, beträgt jedoch vorzugsweise mindestens 50 % seiner ursprünglichen Länge.

Die erfindungsgemäße Reckung der Gleitbelagstreifen hat eine im Vergleich zu ungereckt aufgebrachten Streifen deutlich festere Bindung an das kautschukartige Grundmaterial des Profilstranges zur Folge. Diese überraschend günstige Wirkung konnte sogar mit Belagstreifen aus Fluorkarbonen erzielt werden, die bekanntlich besonders schlechte Hafteigenschaften besitzen. Als « gereckter Zustand » ist dabei stets eine plastische, bleibende Längung des Gleitbelagstreifens im Gegensatz zu einem nur während einer Zugkrafteinwirkung vorhandenen Dehnungszustand zu verstehen.

Zusätzlich zu der verbesserten Haftverbindung stellen sich als weitere Vorteile der Erfindung eine höhere Reißfestigkeit der Gleitbelagstreifen und ein optisch verbessertes Erscheinungsbild ihrer Oberfläche heraus. Die mit dem Reckvorgang einhergehende Verringerung der Streifendicke schlägt sich infolge der Werkstoffeinsparung in verminderten Herstellungskosten nieder, und darüber hinaus mildert sie den sonst unvermeidlichen Versteifungseffekt an dem fertigen Profilstrang ab.

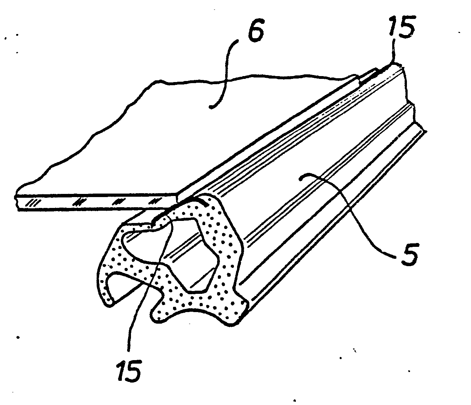

Zur Verdeutlichung der Erfindung ist in der Zeichnung ein Teilstück eines erfindungsgemäß gefertigten Profilstranges in Einbaulage mit anliegendem Fensterglas schematisch dargestellt :

Der beispielsweise als Dichtungsleiste für eine Fensterumrandung in Kraftfahrzeugen verwendbare Profilstrang 5 ist überwiegend aus einem witterungsbeständigen Gummi hergestellt und nur in dem mit der beweglichen Fensterscheibe 6 in gleitende Berührung tretenden äußeren Umfangsabschnitt mit einem festhaftend aufgebrachten Gleitbelagstreifen 15 versehen. Der Gleitbelagstreifen bildet an dem Profilstrang eine Zone erhöhter Gleitfähigkeit und verschafft der Glasscheibe 6 eine ihre Gleitbewegung begünstigende Berührungsfläche an dem in seinen übrigen Umfangszonen vergleichsweise stark reibenden Profilstrang. Er kann in Form eines schmalen Folienbandes aus einem thermoplastischen Kunststoff wie z. B. Polyvinylchlorid, Polyamid, Polyäthylen od. dgl. hergestellt sein und wird vor dem Aufbringen auf den Profilstrang 5 einer zur bleibenden Längung führenden starken Reckung unterworfen.

## Patentansprüche

1. Verfahren zum Herstellen eines Profilstrangs (5) aus Kautschuk oder einem kautschukartigen Elastomer mit in Teilbereichen seines Querschnittsumfanges in haftender Verbindung aufgebrachten und über seine ganze Länge durchlaufenden Gleitbelagstreifen aus einem andersartigen Stoff, wobei ein vorgefertigter Gleitbelagstreifen (15) in in Längsrichtung gerecktem Zustand im Spritzkopf einer Strangpresse mit dem in diesem Spritzkopf aus Kautschuk oder einem kautschukartigen Elastomer geformten Grundprofil vereinigt und anschließend mit diesem zusammenvulkanisiert wird.

2. Verfahren nach Anspruch 1, wobei ein vorgefertigter, bleibend gereckter und nach der Reckung zwischengelagerter Gleitbelagstreifen (15) auf das Grundprofil aufgebracht wird.

3. Verfahren nach Anspruch 1, wobei der Gleitbelagstreifen (15) unter der Einwirkung einer seinen gereckten Zustand hervorrufenden Zugkraft auf das Grundprofil aufgebracht wird.

4. Verfahren nach einem der Ansprüche 1 bis 3, wobei der Gleitbelagstreifen (15) um mindestens 50 % seiner ursprünglichen Länge gereckt wird.

## Claims

1. Method of producing an extruded profile (5) formed from rubber or a rubber-like elastomeric material and comprising slidable cover strips of a different type of material, which are applied in adhesive connection in partial regions of its cross-sectional dimension and extend over its entire length, a prefabricated slidable cover strip (15) being joined, in the longitudinally stretched state in the extrusion head of an extrusion press, to the basic profile, which is formed from rubber or a rubber-like elastomeric material in this extrusion head, and finally being vulcanised together with this basic profile.

2. Method according to claim 1, wherein a prefabricated, permanently stretched slidable cover strip (15), which is interposed after the stretching operation, is applied to the basic profile.

3. Method according to claim 1, wherein the slidable cover strip (15) is applied to the basic profile upon application of a tensile force giving rise to its stretched state.

4. Method according to any of claims 1 to 3, wherein the slidable cover strip (15) is stretched by an amount corresponding to at least 50 % of its original length.

## Revendications

1. Procédé de fabrication d'une garniture profilée (5) en caoutchouc, ou en élastomère analogue au caoutchouc, comportant des rubans de revêtement glissant, constitués d'une matière d'une autre nature, disposés en liaison adhérente dans des zones partielles de son pourtour de section et s'étendant en continu sur toute sa longueur, procédé selon lequel un ruban de revêtement glissant (15) préfabriqué est joint, dans une condition étirée dans la direction longitudinale, dans la tête de filage d'une presse à extruder, avec le profilé de base formé dans cette tête de filage à partir de caoutchouc ou d'un élastomère analogue au caoutchouc puis est ensuite lié à celui-ci par vulcanisation.

2. Procédé selon la revendication 1, où un ruban de revêtement glissant (15) préfabriqué, étiré de façon permanente et stocké intermédiairement après l'étirage, est mis en place sur le profilé de base.

3. Procédé selon la revendication 1, où le ruban de revêtement glissant (15), soumis à l'action d'une force de traction produisant sa condition étirée, est mis en place sur le profilé de base.

4. Procédé selon une des revendications 1 à 3, où le ruban de revêtement glissant (15) est étiré jusqu'à au moins 50 % de sa longueur initiale.